# EUROPÄISCHE PATENTSCHRIFT

(11) **EP 1 698 877 B1**
(45) Veröffentlichungstag und Bekanntmachung des Hinweises auf die Patenterteilung: **17.06.2009**
(21) Anmeldenummer: 05004893.3
(22) Anmeldetag: 05.03.2005
(51) Int. Cl.: G01L 7/08, G01L 9/00, G01L 13/00, G01L 13/02, G01L 13/04, G01L 13/06

(54) **Differenzdrucksensor-Anordnung und zugehöriger Differenzdrucksensor**
Differential pressure sensor assembly and associated differential pressure sensor
Dispositif capteur de pression différentielle et capteur de pression différentielle associé

(43) Veröffentlichungstag der Anmeldung: 06.09.2006
(73) Patentinhaber: Grundfos Management A/S, 8850 Bjerringbro (DK)
(72) Erfinder: Jacobsen, Kjeld Winther, Oester Bjerregrav, 8900 Randers (DK)
(74) Vertreter: Hemmer, Arnd

(56) Entgegenhaltungen:
- EP-A- 1 353 160
- WO-A-02/055978
- DE-A1- 4 244 257
- DE-A1- 10 014 634
- US-A- 5 804 735
- US-A1- 2003 005 773
- US-B1- 6 267 159
- US-B1- 6 311 561
- US-B1- 6 418 793

## Beschreibung

Die Erfindung betrifft eine Differenzdrucksensor-Anordnung sowie einen zugehörigen Differenzdrucksensor.

Aus EP 1 353 160 ist ein Differenzdrucksensor mit einer Membran als Messelement bekannt, wobei die Membran von beiden Oberflächen her mit Druck beaufschlagbar ist, so dass über die Auslenkung bzw. die in der Membran auftretenden:Spannungen der Differenzdruck zwischen den beiden Membranoberflöchen bestimmt werden kann.

US 2003/005773 A1 offenbart eine Messanordnung zum Erfassen eines Differenzdruckes. Diese Anordnung weist zwei Gehäuseteile auf, an welchen jeweils ein Rohranschluss zur Anbindung eines Rohres angeordnet ist. Die beiden Gehäuseteile sind so zusammengesetzt, dass zwischen ihnen ein mit den Rohranschlüssen in Verbindung stehender Aufnahmeraum ausgebildet ist. In dem Aufnahmeraum sind dazu zwei einander gegenüberliegende mit den Rohranschlüssen in Verbindung stehende Fluideingänge vorgesehen, welche jeweils von einem O-Ring umgeben sind. Zwischen diese zwei Fluideingänge ist ein Differenzdrucksensor eingesetzt, sodass dieser mit seinen beiden an entgegengesetzten Oberflächen angeordneten Druckaufnahmeflächen zwischen den Fluideingängen zu liegen kommt. Dabei ist jede Druckaufnahmefläche genau einem der Fluideingänge zugeordnet und wird in ihrem Umfangsbereich von einem der O-Ringe abgedichtet. Das heißt es sind zur abgedichteten Montage des Differenzdrucksensors im Bereich der Fluideingänge zwei Dichtungsringe erforderlich. Darüber hinaus ist eine weitere Dichtung erforderlich, welches den aufnahmeraum für den Drucksensor nach außen hin abdichtet, um ein Eindringen von Feuchtigkeit zu verhindern.

Im Hinblick auf diesen Stand der Technik ist es Aufgabe der Erfindung, eine Differenzdrucksensor-Anordnung zu schaffen und einen zugehörigen Differenzdrucksensor bereitzustellen, welche eine vereinfachte Montage und Abdichtung des Differenzdrucksensors bzw. der Druckaufnahmebereiche des Differenzdrucksensors ermöglicht,

Diese Aufgabe wird durch eine Differenzdrucksensor-Anordnung mit den im Anspruch 1 angegebenen Merkmalen sowie durch einen zugehörigen Differenzdrucksensor mit den im Anspruch 14 angegebenen Merkmalen gelöst. Bevorzugte Ausführungsformen ergeben sich aus den Unteransprüchen.

Die erfindungsgemäße Differenzdrucksensor-Anordnung besteht aus einem Differenzdrucksensor und einem Aufnahmeraum, in welchen der Differenzdrucksensor eingesetzt ist. Dabei ist der Aufnahmeraum Teil eines Bauteils oder Aggregates, in welches der Differenzdrucksenor integriert werden soll, beispielsweise ein Pumpen- oder Heizungsaggregat. Dabei weist der Aufnahmeraum Verbindungen zu zwei Bereichen bzw. Medien auf, zwischen denen ein Differenzdruck bestimmt werden soll. Beispielsweise kann der Aufnahmeraum mit zwei Druckleitungen oder einer Druckleitung und der Umgebung in Verbindung stehen. Um die am Aufnahmeraum anliegende Drücke getrennt voneinander an die beiden Druckaufnahmebereiche zur Erfassung des Differenzdruckes an dem Differenzdrucksensor leiten zu können, ist in an dem Differenzdrucksensor und/oder in dem Aufnahmeraum ein Dichtungselement angeordnet, welches den Aufnahmeraum bei eingesetzten Differenzdrucksenor in eine erste und eine zweite Druckzone teilt. Der Differenzdrucksensor ist so angeordnet, dass seine Druckaufnahmebereiche diese beiden Druckzonen zugeordnet sind, so dass der Differenzdrucksensor die Druckdifferenz zwischen den beiden Druckzonen erfassen kann.

Erfindungsgemäß ist die erste Druckzone vollständig in einem Bereich zwischen einer die Längsachse umgebenden Umfangsfläche des Differenzdrucksensors und einer dieser zugewandten Innenwandung des Aufnahmeraumes ausgebildet. Das bedeutet die erste Druckzone erstreckt sich nicht über den Bereich der Stirnseite des Differenzdrucksensors, welche vorzugsweise in Einschubrichtung des Differenzdrucksensors in den Aufnahmeraum vorne gelegen ist. Die Umfangsfläche bildet eine Fläche, vorzugsweise eine Zylinder-, insbesondere eine Kreiszylinderfläche, weiche die Längsachse des Drucksensors im Abstand umgibt. Die Querschnittskontur des Drucksensors kann jedoch auch beliebig anders geformt sein, so dass die Umfangsfläche einen entsprechenden Verlauf nimmt. Die Längsachse des Drucksensors ist vorzugsweise die Achse, in deren Richtung der Drucksensor in den Aufnahmeraum, welcher besonders bevorzugt als Sackloch ausgebildet ist, eingesetzt wird.

Das Dichtungselement ist zwischen dem Drucksensor und der Innenwandung des Aufnahmeraumes gelegen und kann an einem der beiden Bauteile oder an beiden befestigt sein.

Erfindungsgemäß liegt das Dichtungselement, welches die erste Druckzone von der zweiten Druckzone trennt, nicht am Boden eines als Sackloch ausgebildeten Aufnahmeraumes an, sondern lediglich an der umfänglichen Innenwandung des Aufnahmeraumes. Die Ausbildung der ersten Druckzone nur im Umfangsbereich des Drucksensors hat den Vorteil, dass eine bessere Abdichtung zwischen der ersten Druckzone und der zweiten Druckzone erreicht werden kann.

Ferner ist die erste Druckzone erfindungsgemäß so ausgebildet, dass sich zumindest ein Abschnitt der ersten Druckzone in Umfangsrichtung nicht über die gesamte Umfangsfläche, sondern nur über einen Teilbereich von dieser erstreckt. Das heißt, benachbart zu diesem Abschnitt der ersten Druckzone ist in derselben Querschnittsebene des Drucksensors, welche sich normal zu dessen Längsachse erstreckt, auch ein Abschnitt der zweiten Druckzone an der Umfangsfläche angeordnet. Der genannte Abschnitt der ersten Druckzone ist somit in einer Querschnittsebene des Drucksensors in Umfangsrichtung versetzt zu einem Abschnitt der zweiten Druckzone angeordnet. Durch diese Ausgestaltung kann eine kompakte Anordnung der Druck- bzw. Fluidanschlüsse in dem Aufnahmeraum und der Drucköffnungen des Drucksensors zueinander erreicht werden. Ferner ist eine zuverlässige Abdichtung der beiden Druckzonen zueinander möglich.

Vorzugsweise sind eine erste und eine zweite Drucköffnung an der Umfangsfläche des Differenzdrucksensors ausgebildet und der umfänglichen Innenwandung des Aufnahmeraumes zugewandt. Die erste und zweite Drucköffnung sind weiter bevorzugt diametral entgegengesetzt am Umfang des Differenzdrucksensors angeordnet. Dabei können die Drucköffnungen in derselben Querschnittsebene oder auch in Richtung der Längsachse des Drucksensors zueinander versetzt angeordnet sein. Die Drucköffnungen stellen die Verbindung zu dem eigentlichen im Inneren des Drucksensors angeordneten Messelement, vorzugsweise einer Membran her. Dabei steht jeweils eine Drucköffnung mit einer Seite der Messmembran in Verbindung, so dass die Drücke, deren Differenz zu bestimmen ist, an beiden Seiten der Membran anliegen und über die in der Membran auftretenden Spannungen der Differenzdruck bestimmt werden kann.

Weiter bevorzugt liegt, wenn der Differenzdrucksensor in dem Aufnahmeraum eingesetzt ist, die erste Drucköffnung einem ersten Fluideingang des Aufnahmeraumes gegenüber, wobei der diese erste Drucköffnung umgebende Teil der Umfangsfläche des Differenzdrucksensors dichtend an dem den ersten Fluideingang umgebenden Bereich der Innenwandung des Aufnahmeraumes anliegt. Bei dieser Ausgestaltung wird die erste Druckzone, in welcher die erste Drucköffnung und der erste Fluideingang liegen, im Wesentlich nur von der Drucköffnung selber gebildet. Der übrige den Drucksensor umgebenden Bereich bildet die zweite Druckzone. Das heißt, es ist nur eine sehr kleine Dichtfläche, welche die erste Drucköffnung umgibt, zwischen dem Differenzdrucksensor und der Innenwandung des umgebenden Aufnahmeraumes erforderlich, um die erste und zweite Druckzone voneinander zu trennen. Durch die Verkleinerung der Dichtfläche wird die Verwendung eines kleineren Dichtelementes möglich. Ferner reduziert sich aufgrund der kürzeren Grenze bzw. Dichtlinie zwischen erster und zweiter Druckzone die Gefahr von Leckagen zwischen den beiden Druckzonen.

Zweckmäßigerweise ist ein die erste Drucköffnung des Differenzdrucksensors umgebendes Dichtelement vorgesehen, um die erste Drucköffnung gegenüber dem umgebenden Teil des Aufnahmeraumes, d. h. gegenüber der zweiten Druckzone abzudichten. Das Dichtelement kann beispielsweise als O-Ring ausgebildet sein, welcher zwischen der Umfangsfläche des Differenzdrucksensors und der Innenwandung des Aufnahmeraumes platziert ist. Dazu können an der Innenwandung des Aufnahmeraumes und/oder umgebend der Drucköffnung des Drucksensors Aufnahmenuten und/oder -schultern für den O-Ring vorgesehen sein. Alternativ kann auch ein anders ausgebildetes Dichtungselement vorgesehen sein, welches die erste Drucköffnung gegenüber dem umgebenden Teil des Aufnahmeraumes abdichtet. Dieses Dichtelement kann fest mit der Innenwandung des Aufnahmeraumes oder der Umfangsfläche des Differenzdrucksensors verbunden sein. Das Dichtelement bildet eine gedichtete Verbindung zwischen dem ersten Fluideingang des Aufnahmeraumes und der ersten Drucköffnung des eingesetzten Differenzdrucksensors, wobei der so geschaffene Strömungsdurchgang gegenüber dem umgebenden Aufnahmeraum, welcher die zweite Druckzone bildet, abgedichtet ist.

Besonders bevorzugt kann das die erste Drucköffnung umgebende Dichtelement derart ausgebildet sein, dass der Differenzdrucksensor zumindest in einem die erste Drucköffnung umgebenden Bereich mit einer elastischen Oberfläche versehen ist. Diese elastische Oberfläche kommt an der Innenwandung des Aufnahmeraumes, vorzugsweise den ersten Fluideingang des Aufnahmeraumes umgebend, zur Anlage und stellt somit die Abdichtung der Verbindung zwischen ersten Fluideingang und erster Drucköffnung gegenüber dem umgebenden Aufnahmeraum her. Die elastische Oberfläche des Differenzdrucksensors kann einen integralen Bestandteil des Differenzdrucksensors bilden, so dass kein separates Dichtelement erforderlich ist.

Gemäß einer weiteren bevorzugten Ausführungsform ist zwischen einem der ersten Drucköffnung des Differenzdrucksensors entgegengesetzten Abschnitt der Umfangsfläche des Differenzdrucksensors und der umgebenden Innenwandung des Aufnahmeraumes ein Abschnitt der zweiten Druckzone angeordnet. Dies bedeutet, in einem Querschnittsbereich des Drucksensors liegen Bereiche der ersten und zweiten Druckzonen an der Umfangsfläche des Drucksensors diametral entgegengesetzt zueinander, d. h. sie sind einander abgewandt. Dies ist vorzugsweise der Querschnittsbereich, in dem die Drucköffnungen des Drucksensors und/oder die Fluidöffnungen des Aufnahmeraumes angeordnet sind.

Die vorgenannte Anordnung der ersten und zweiten Druckzone an bezüglich der Längsachse des Druckachse diametral entgegengesetzten Umfangsbereichen ermöglicht ferner eine Ausgestaltung, bei welcher der Fluiddruck selber eine Anpresskraft auf das zwischen der Umfangsfläche des Differenzdrucksensors und der Innenwandung des Aufnahmeraumes angeordneten Dichtelementes erzeugt und somit für eine zuverlässige Abdichtung zwischen erster und zweiter Druckzone sorgt. Dies wird dadurch erreicht, dass ein zweiter Fluideingang des Aufnahmeraumes, welcher in Verbindung der zweiten Druckzone steht, derjenige Fluideingang ist, welcher zur Anlage eines höheren Fluiddruckes vorgesehen ist als der erste Fluideingang.

Bei vielen Anwendungen des Differenzdrucksensors ist durch die Anordnung von vornherein klar, dass immer einer der beiden Drücke, zwischen denen der Differenzdruck zu bestimmen ist, höher ist als der andere. Bei einer solchen Anordnung kann sichergestellt werden, dass der höhere Druck stets an dem zweiten Fluideingang anliegt. Wenn der zweite Fluideingang nun mit der der ersten Druckzone diametral entgegengesetzt angeordneten zweiten Druckzone in Verbindung steht, bewirkt der höhere Fluiddruck eine quer zur Längsachse des Sensors verlaufende Druckkraft in Richtung der ersten Druckzone, d. h. der Differenzdrucksensor wird im Bereich der ersten Druckzone in Richtung der Innenwand des Aufnahmeraumes gedrückt, so dass ein dort angeordnetes Dichtungselement sicher in Anlage mit der Innenwandung des Aufnahmeraumes und/oder der Umfangsfläche des Differenzdrucksensors gehalten wird. Dies ist insbesondere bei der Ausführungsform sinnvoll, bei welcher das Dichtungselement die erste Drucköffnung in deren Umfangsbereich umgibt und die erste Drucköffnung direkt dem ersten Fluideingang des Aufnahmeraumes gegenüberliegt. Hier wird erreicht, dass der Fluiddruck, welcher auf die Seite der Umfangsfläche, welche der ersten Drucköffnung abgewandt ist, wirkt, den die erste Drucköffnung umgebenden Bereich in dichtenden Anlage an dem Dichtelement bzw. der Innenwandung des Aufnahmeraumes hält.

Zur Begünstigung dieses Effektes liegt der Differenzdrucksensor in dem die erste Drucköffnung umgebenden Bereich vorzugsweise mit weniger als der Hälfte seiner Umfangsfläche an der Innenwandung des Aufnahmeraumes an. Auf diese Weise ist sichergestellt, dass der diametral entgegengesetzt liegende Bereich der Umfangsfläche, welcher in der zweiten Druckzone liegt, größer ist, als die entgegengesetzt liegende Umfangsfläche, welche im Bereich der ersten Druckzone liegt. Dies bewirkt, dass die Fläche, auf welche der in der zweiten Druckzone anliegende Fluiddruck wirkt größer ist, als die Fläche, auf welche der in der ersten Druckzone anliegende Fluiddruck wirkt. Da die Flächen entgegengesetzt zueinander angeordnet sind, wirken die von den in der ersten und zweiten Druckzone anliegenden Drücken erzeugten Kräfte einander entgegengerichtet, wobei die in der zweiten Druckzone erzeugte Kraft aufgrund der größeren Umfangsfläche und insbesondere aufgrund des höheren Fluiddruckes größer als die in der ersten Druckzone erzeugte Kraft ist, so dass der Differenzdrucksensor in Richtung der ersten Druckzone quer zu seiner Längsachse gedrückt wird und so eine dichtende Anlage im Umfangsbereich der ersten Drucköffnung erzeugt.

Gemäß einer speziellen Ausführungsform der Erfindung weist zumindest ein im inneren Aufnahmeraumes angeordneter Abschnitt des Differenzdrucksensors eine Ummantlung aus einem elastischen Material auf, welche bei eingesetztem Drucksensor vorzugsweise derart mit der Innenwandung des Aufnahmeraumes zur Anlage kommt, dass dieser nach außen hin abgedichtet ist. Der Aufnahmeraum ist vorzugsweise als Sackloch ausgebildet, welches bei eingesetztem Drucksensor zu seiner Öffnung hin abgedichtet werden muss. Hierzu ist in dem der Öffnung des Aufnahmeraumes zugewandten Bereichs zwischen dem Drucksensor und der Innenwandung des Aufnahmeraumes ein Dichtelement vorgesehen. Dieses Dichtelement kann durch eine elastische Ummantelung des Differenzdrucksensors gebildet werden. Die Ummantelung kann als separates Bauteil auf den Differenzdrucksensor aufgesetzt werden, jedoch auch integral mit dem Differenzdrucksensor ausgebildet oder fest mit diesem verbunden sein. Auf diese Weise wird die Montage vereinfacht, da kein separates Dichtungselement wie z. B. ein O-Ring zur Abdichtung des Aufnahmeraumes nach außen hin vorgesehen werden muss.

Weiter bevorzugt wird die Ummantelung von einem die äußere Form des Differenzdrucksensors definierenden Adapter gebildet, welcher auf das Äußere des Differenzdrucksensors aufgesetzt ist. Diese Ausgestaltung hat den Vorteil, dass die Ummantelung gleichzeitig zwei Funktionen übernimmt. Zum einen bildet die Ummantelung das Dichtungselement, welches den Aufnahmeraum bei eingesetztem Differenzdrucksensor nach außen hin abdichtet. Ferner dient die Ummantelung gleichzeitig als Adapter, welcher die äußere Form des Differenzdrucksensors an einem speziellen Einsatzzweck insbesondere an die Form und Größe des Aufnahmeraumes anpasst. Dies ermöglicht, ein und denselben Differenzdrucksensor für verschiedene Einsatzzwecke zu verwenden, wobei lediglich unterschiedliche Adapter auf den Differenzdrucksensor aufgesetzt werden müssen. Die elastische Ummantelung kann gleichzeitig auch noch das Dichtungselement bilden, welches den Aufnahmeraum bei eingesetztem Differenzdrucksensor in die erste und die zweite Druckzone teilt. Insbesondere ist die elastische Ummantelung vorzugsweise in dem eine erste Drucköffnung des Differenzdrucksensors umgebende Bereich als Dichtungsfläche ausgebildet, welche an der Innenwandung des Aufnahmeraumes in einem eine erste Fluidöffnung des Aufnahmeraumes umgebenden Bereich dichtend zur Anlage kommt.

Gemäß einer weiteren bevorzugten Ausführungsform der Erfindung ist zwischen dem Differenzdrucksensor und der Innenwandung des Aufnahmeraumes ein sich um die Umfangsfläche des Differenzdrucksensors erstreckender Dichtungsring angeordnet, welcher den Aufnahmeraum in die erste und zweite Druckzone teilt. Der Dichtungsring erstreckt sich derart um die Umfangsfläche des Differenzdrucksensors, dass dessen Längsachse, in deren Richtung der Differenzdrucksensor in den Aufnahmeraum eingesetzt ist, sich quer zu der von dem Dichtungsring aufgespannten Ebene erstreckt, d. h. die Längsachse liegt nicht in der von dem Dichtungsrichtung aufgespannten Ebene. Auch bei dieser Anordnung wird sichergestellt, dass die Trennung zwischen erster und zweiter Druckzone im Umfangsbereich des Drucksensors und nicht an dessen Stirnseite erfolgt, wodurch eine sichere Abdichtung zwischen erster und zweiter Druckzone erreicht werden kann.

Vorzugsweise verläuft der Dichtungsring derart geneigt zu einer Querschnittsebene des Differenzdrucksensors, dass die erste und zweite Druckzone an der Umfangsfläche des Differenzdrucksensors an entgegengesetzten Seiten des Dichtungsringes gelegen sind. Die von dem Dichtungsring aufgespannte Ebene verläuft dabei schräg zur Längsachse des Drucksensors in einem Winkel kleiner als 90°. Auf diese Weise wird erreicht, dass der Dichtungsring an der einen Umfangsseite in Richtung der Längsachse des Differenzdrucksensors näher an dessen Stirnseite liegt als der diametral entgegengesetzten Umfangsseite des Differenzdrucksensors. Auf diese Weise wird bei Verwendung eines Dichtungsringes dennoch erreicht, dass in derselben Querschnittsebene des Differenzdrucksensors Teile der ersten und Teile der zweiten Druckzone gelegen sind, wobei die erste und zweite Druckzone in diesem Bereich an entgegengesetzten Seiten der Umfangsfläche des Differenzdrucksensors angeordnet sind. Dies ermöglicht, dass die Drucköffnungen des Differenzdrucksensors an dessen Umfangsfläche und vorzugsweise auch die Fluideingänge des Aufnahmeraumes in derselben Querschnittsebene, d. h. an derselben Position in Richtung der Längsachse des Differenzdrucksensors liegen können, so dass eine kompakte Anordnung der erforderlichen Anschlüsse an dem Aufnahmeraum erreicht wird. Alternativ können die Drucköffnungen an dem Differenzdrucksensors in Richtung seiner Längsachse versetzt zueinander sein, so dass ein geringerer Neigungswinkel des Dichtungsringes zur Querschnittsebene des Drucksensors ausreichend ist.

Die Erfindung betrifft ferner einen Differenzdrucksensor, welcher in der vorangehend beschriebenen Differenzdrucksensor-Anordnung zum Einsatz kommen kann. Dieser Differenzdrucksensor weist erfindungsgemäß an seiner Umfangsfläche zumindest ein Dichtungselement auf, welches die Umfangsfläche in Umfangsrichtung in einen ersten und zweiten Oberflächenbereich teilt. Das Dichtungselement kann als separates Bauteil ausgebildet sein, welches auf den Differenzdrucksensor aufgesetzt ist, oder integraler Bestandteil des Differenzdrucksensors bzw. dessen Umfangsfläche sein. Der erste und zweite Oberflächenbereich sind jeweils die Bereiche, welche, wenn der Drucksensor in einen zugehörigen Aufnahmeraum eingesetzt ist, einer ersten bzw. einer zweiten Druckzone des Aufnahmeraumes zugewandt sind. Das heißt das Dichtungselement, welches an dem Differenzdrucksensor angeordnet ist, ist dasjenige Dichtungselement, welches den Aufnahmeraum bei eingesetztem Differenzdrucksensor in die erste und die zweite Druckzone teilt. Erfindungsgemäß ist das Dichtungselement dabei so angeordnet, dass sich der erste Oberflächenbereich ausschließlich über die Umfangsfläche und gleichzeitig in Umfangsrichtung nur über einen Teilbereich dieser Umfangsfläche erstreckt. Das heißt es existiert ein Querschnittsbereich des Differenzdrucksensors, dessen Umfangslinie sowohl dem ersten Oberflächenbereich als auch dem zweiten Oberflöchenberfeich zugehörige Abschnitte aufweist. Der erste Oberflächenbereich ist so angeordnet, dass er ausschließlich im Umfangsbereich angeordnet ist, d. h. der erste Oberflächenbereich erstreckt sich nicht über die Stirnfläche des Drucksensors.

Dabei ist eine erste Drucköffnung des Differenzdrucksensors in dem ersten Oberflächenbereich und eine zweite Drucköffnung des Differenzdrucksensors in dem zweiten Oberflächenbereich ausgebildet. Die beiden Drucköffnungen stehen jeweils mit dem eigentlichen Messelement im Inneren des Differenzdrucksensors, vorzugsweise einer Messmembran in Verbindung, wobei die erste Drucköffnung mit einer ersten Oberfläche der Membran und die zweite Drucköffnung mit einer zweiten Oberfläche der Membran in Verbindung steht.

Das Dichtungselement ist vorzugsweise als eine die erste Drucköffnung umgebende Dichtfläche ausgebildet. Das heißt der die erste Drucköffnung umgebende Bereich der Umfangsfläche des Differenzdrucksensors weist ein Dichtmaterial mit vorzugsweise elastischen Eigenschaften auf, welches an der Innenwandung eines Aufnahmeraumes dichtend zur Anlage kommen kann. Die Dichtfläche kann durch eine elastische Ummantelung der Umfangsfläche des Differenzdrucksensors gebildet werden.

Gemäß einer alternativen Ausführungsform ist das Dichtungselement als Dichtungsring ausgebildet, welcher sich über den Umfang des Differenzdrucksensors geneigt zum Querschnitt des Differenzdrucksensors erstreckt. Das heißt, der Dichtungsring erstreckt sich derart, dass sich die Längsachse des Differenzdrucksensors quer zu einer von dem Dichtungsring aufgespannten Ebene erstreckt. Aufgrund der Neigung des Dichtungsringes wird erreicht, dass der Dichtungsring eine Umfangslinie des Differenzdrucksensors kreuzt, so dass ein Abschnitt der Umfangslinie in dem ersten Oberflächenbereich und ein zweiter Abschnitt der Umfangslinie in dem zweiten Oberflächenbereich liegt. Auf diese Weise kann der Dichtungsring bei in einen Aufnahmeraum eingesetztem Differenzdrucksensor den Aufnahmeraum so in eine erste und zweite Druckzone teilen, dass entlang einer Umfangslinie des Differenzdrucksensors sowohl Abschnitte der ersten Druckzone als auch Abschnitte der zweiten Druckzone gelegen sind.

Besonders bevorzugt weist der Differenzdrucksensor eine, vorzugsweise abnehmbare Ummantelung aus einem elastischen Material auf, welche zumindest den Teil des Differenzdrucksensors umgibt, in dem Drucköffnungen ausgebildet sind, und die Außenkontur des Differenzdrucksensors einschließlich des Dichtungselementes definiert. Das heißt, das Dichtungselement ist integral mit der Ummantelung ausgebildet. Dies kann sowohl bei einem als Dichtungsring ausgebildeten Dichtungselement, welches sich über den Umfang des Differenzdrucksensors erstreckt, als auch bei einem Dichtungselement, welches als eine die Drucköffnung umgebende Dichtfläche ausgebildet ist, verwendet werden. Die elastische Ummantelung ermöglicht es, einen standardmäßig verfügbaren Differenzdrucksensor an spezielle Aufnahmeräume anzupassen, indem einfach eine entsprechend ausgebildete Ummantelung auf dem Differenzdrucksensor aufgesetzt wird.

Nachfolgend wird die Erfindung beispielhaft anhand der beigefügten Figuren beschrieben. In diesen zeigt:
- Fig. 1: eine Schnittansicht des Aufnahmeraumes mit geschnittenen Differenzdrucksensor vor dem Einsetzen,

- Fig. 2: die Anordnung gemäß Fig. 1 mit ungeschnittener Darstellung des Differenzdrucksensors,
- Fig. 3: eine Schnittansicht der Anordnung gemäß Figuren 1 und 2, wobei der Differenzdrucksensor in den Aufnahmeraum eingesetzt ist,
- Fig. 4: eine geschnitten Detailansicht des Adapters des Differenzdrucksensors gemäß Figuren 1 bis 3,
- Fig. 5: eine perspektivische Ansicht des Adapters gemäß Fig. 4 von der Seite der zweiten Drucköffnung her gesehen,
- Fig. 6: eine perspektivische Ansicht des Adapters gemäß Figuren 4 und 5 von der Seite der ersten Drucköffnung her gesehen,
- Fig. 7: eine Schnittansicht eines Differenzdrucksensors gemäß einer zweiten Ausführungsform der Erfindung entlang der Linie VII-VII in Fig. 8 und
- Fig. 8: eine Seitenansicht des Differenzdrucksensors gemäß Fig. 7.

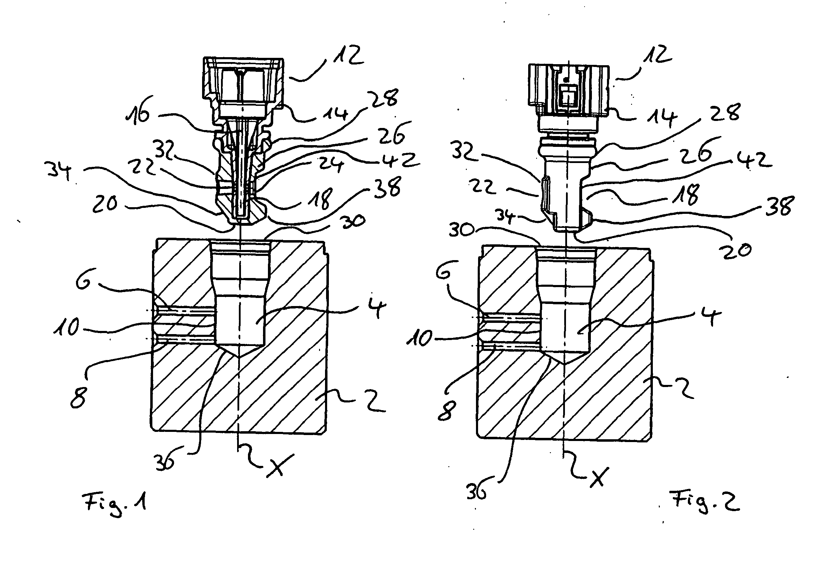

Anhand der Figuren 1 bis 6 wird eine erste Ausführungsform der Erfindung beschrieben. Die Figuren 1 bis 3 zeigen einen in einem Bauteil 2 ausgebildeten Aufnahmeraum 4. Dabei ist das Bauteil 2 ein beliebiges Bauteil eines Aggregates, in welches der Differenzdrucksensor integriert werden soll. Der Aufnahmeraum 4 ist als Sackloch im gezeigten Beispiel mit rotationssymetrischer Ausgestaltung bezüglich der Längsachse X ausgebildet. Der Aufnahmeraum 4 weist einen ersten Fluideingang 6 und einen zweiten Fluideingang 8 auf, welche an der umfänglichen Innenwandung 10 in den Aufnahmeraum 4 münden. An den Fluideingängen 6 und 8 liegen die Drücke, deren Differenz zu bestimmen ist, an. im gezeigten Beispiel sind der erste Fluideingang 6 und der zweite Fluideingang 8 an derselben Winkelposition bezüglich der Längsachse X in Richtung der Längsachse X zueinander versetzt angeordnet. Gemäß alternativer Ausführungsformen können die Fluideingänge 6 und 8 auch an unterschiedlichen Winkelpositionen bezüglich der Längsachse X und insbesondere auch an derselben Position in Längsrichtung der Achse X angeordnet werden. So ist auch eine einander gegenüberliegende Anordnung möglich.

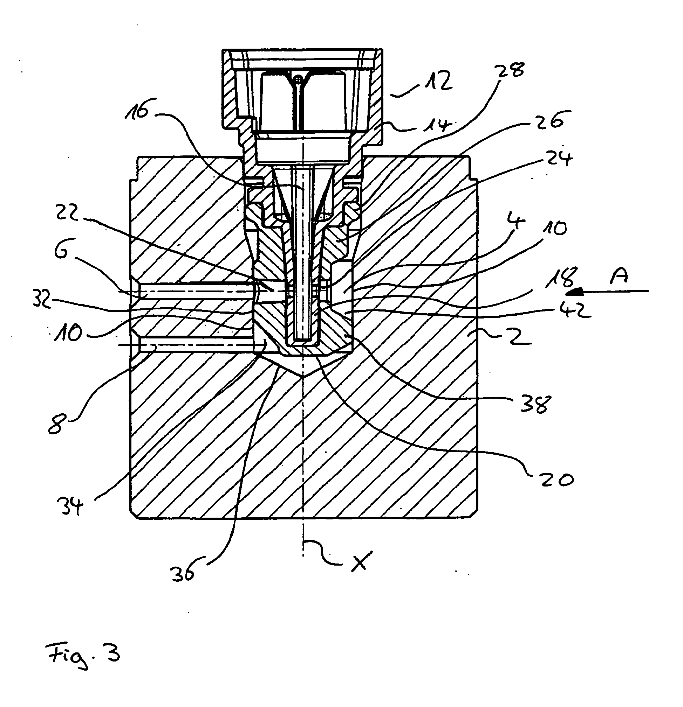

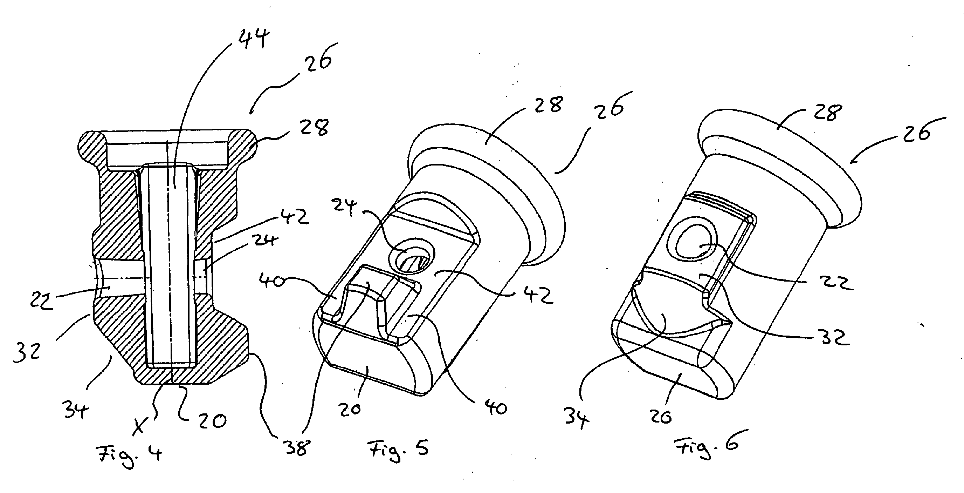

Der Aufnahmeraum 4 ist ausgebildet, um den Differenzdrucksensor 12, wie in Fig. 3 gezeigt, aufzunehmen. Der Differenzdrucksensors 12 ist in seinem grundsätzlichen Aufbau z.B. aus EP 1 353 160 bekannt. Der Differenzdrucksensor 12 weist ein Gehäuse 14 auf, in dessen Inneren in Richtung der Längsachse X eine Aufnahme 16 für eine Leiterplatte angeordnet ist. Die Leiterplatte trägt das eigentliche Messelement, vorzugsweise in Form einer Membran, sowie elektronische Bauteile. Das Messelement ist in einer axialen Verlängerung 18 des Gehäuses 14 angeordnet, welche sich in Richtung der Längsachse X erstreckt. Der Differenzdrucksensor 12 wird mit der Verlängerung 18 mit deren Stirnseite 20 voran in den Aufnahmeraum 4 eingesetzt, wie in Fig. 4 gezeigt.

An dem der Stirnfläche 20 in Richtung der Längsachse X entgegengesetzten Ende des Differenzdrucksensors 12 ist an dem Gehäuse 14 ein hier nicht näher beschriebener Anschlussstecker für den Differenzdrucksensor 12 ausgebildet.

In der Verlängerung 18 sind eine erste Drucköffnung 22 und eine zweite Drucköffnung 24 an bezüglich der Längsachse X diametral entgegengesetzten Seiten ausgebildet. Zwischen den Drucköffnungen 22 und 24 ist im Inneren der Verlängerung 18 das eigentliche Messelement angeordnet. Das Messelement, welches, wie aus EP 1 353 160 bekannt, vorzugsweise als Membran ausgebildet ist, so dass die beiden Drucköffnungen 22, 24 mit entgegengesetzten Oberflächen der Membran in Verbindung stehen, so dass die zwei Drücke, deren Differenz zu bestimmen ist, an den beiden Membranoberflächen anliegen können.
Auf die Verlängerung 18 ist ein Adapter 26 aufgesetzt, welcher die Verlängerung 18 an ihrer Umfangsfläche sowie an der Stirnseite 20 umgibt. Der Adapter 26 ist aus einem elastischen Material ausgebildet, so dass er die erforderliche Abdichtung des Differenzdrucksensors 12 im Inneren des Aufnahmeraumes 4 bewirkt. Ferner hat der Adapter 26 die Aufgabe die Verlängerung 18 eines standardmäßig vorgesehenen Differenzdrucksensors 12 an einen speziellen Einsatzzweck und insbesondere die Form des Aufnahmeraumes 4 anzupassen. So kann ein und derselbe Differenzdrucksensor 12 in unterschiedliche Aufnahmeräume 4, insbesondere Aufnahmeräume 4 mit unterschiedlichen Durchmessern eingesetzt werden, wobei lediglich unterschiedlich dimensionierte Adapater 26 auf die Verlängerung 18 des Differenzdrucksensors 12 aufgesetzt werden. Die Adapter 26 weisen dabei immer dieselbe Innenkontur, jedoch an den jeweiligen Aufnahmeraum 4 angepasste Außenkonturen auf. Der Adapter 26 kann, wie im gezeigten Ausführungsbeispiel als separates Bauteil ausgebildet sein, jedoch auch integral mit dem Gehäuse 14 des Differenzdrucksensors 12 ausgebildet sein, indem beispielsweise das Gehäuse 14 des Differenzdrucksensors 12 mit einem elastischen Material umspritzt wird, um den Adapter 26 auszubilden.

Der Adapter 26 bildet somit eine Ummantelung für die Verlängerung 18 des Differenzdrucksensors 12, wobei sich die erste Drucköffnung 22 und die zweite Drucköffnung 24 in diametral entgegengesetzten Richtungen normal zu der Längsachse X durch die Wandungen des Adapters 26 hindurch erstrecken und somit eine Verbindung vom Inneren des Differenzdrucksensors 12 zur Außenseite bzw. Umfangsfläche des Adapters 26 herstellen. Die Umfangsfläche des Differenzdrucksensors, welche in diesem Fall an dem Adapter 26 ausgebildet ist, ist die im eingesetzten Zustand der Innenwandung 10 des Aufnahmeraumes 4 zugewandte Außenfläche mit Ausnahme der Stirnseite 20. Es handelt sich somit im Wesentlichen um die sich um die Längsachse X herum erstreckende längliche Außenfläche.

Beim Einbau in das Bauteil 2 wird der Differenzdrucksensor 12 mit seiner Stirnseite 20 voran in Richtung der Längsachse X in den Aufnahmeraum 4 eingesetzt, wobei der Adapter 26 mit seiner Umfangsfläche an verschiedenen Stellen der Innenwandung 10 des Aufnahmeraumes 4 zur Anlage kommt. Zum einen weist der Adapter 26 an seinem der Stirnseite 20 abgewandten Ende einen kreisringförmig nach außen auskragenden Wulst 28 auf. Der Wulst 28 übernimmt die Funktion eines O-Ringes zum Abdichten des Differenzdrucksensors 12 in dem Aufnahmeraum 4 nach außen hin. Das heißt, der Wulst 28 dichtet die Öffnung 30 des Aufnahmeraumes 4 bei eingesetztem Differenzdrucksensors 12 ab, indem er mit seinem Außenumfang an der Innenwandung 10 nahe der Öffnung 30 zur Anlage kommt.

Zum anderen bildet der Adapter 26 in Umgebung der ersten Drucköffnung 22 eine Dichtfläche 32. Die Dichtfläche 32 hat eine im Wesentlichen rechteckige Kontur, in deren Zentrum die erste Drucköffnung 22 ausgebildet ist. Die Dichtfläche 32 ist Teil der Umfangsfläche und erstreckt sie sich bogenförmig um die Längsachse X mit einem Radius, welcher im Wesentlichen dem Radius des Aufnahmeraumes 4 im Bereich des ersten Fluideinganges 6 entspricht. Um eine ausreichende Abdichtung zu haben, kann der Radius, in dem die Dichtfläche 32 von der Längsachse X beabstandet ist, geringfügig größer als der halbe Durchmesser des Aufnahmeraumes 4 sein. Die Dichtfläche 32 erstreckt sich nur über einen kleinen Kreisbogen bezüglich der Längsachse X, welcher deutlich kleiner als der halbe Umfang der Umfangsfläche des Adapters 26 ist. Die Dichtfläche 32 ist so ausgestaltet, dass sie, wenn der Differenzdrucksensor 12 in den Aufnahmeraum 4 eingesetzt ist, wie in Fig. 4 gezeigt ist, an der Innenwandung 10 des Aufnahmeraumes 4 umfänglich des ersten Fluideinganges 6 zur Anlage kommt. Der Fluideingang 6 liegt in diesem eingesetzten Zustand direkt der ersten Drucköffnung 22 gegenüber, so dass diese miteinander in Verbindung stehen. Die Dichtfläche 32 dichtet die Fluidverbindung zwischen dem Fluideingang 6 und der Drucköffnung 22 gegenüber dem übrigen Teil des Aufnahmeraumes 4 ab. Der Bereich der Verbindung zwischen dem Fluideingang 6 und der ersten Drucköffnung 22 bildet somit eine erste Druckzone des Aufnahmeraumes 4, während der die Dichtfläche 32 außen umgebende Bereich die zweite Druckzone bildet.

Die erste Druckzone, welche durch die Dichtfläche 32 begrenzt wird, ist lediglich an der Umfangsfläche des Differenzdrucksensors 12 bzw. dessen Adapters 26 ausgebildet und erstreckt sich nur über einen Teilbogen des Umfanges, so dass eine kleine Dichtfläche bzw. Dichtlinie gebildet wird, welche die beiden Druckzonen voneinander trennt.

Der zweite Fluideingang 8 mündet in einem Bereich des Aufnahmeraumes 4, in welchem der Adapter 26 des Differenzdrucksensors 12 nicht an der Innenwandung 10 anliegt. Hier weist der Adapter 26 einen Rücksprung 34 auf, so dass von dem Fluideingang 8 ein freier Strömungsdurchgang in das Innere des Aufnahmeraumes 4 auch bei eingesetztem Differenzdrucksensor 12 gewährleistet ist. Ferner ist die Stirnseite 20 des Differenzdrucksensors 12 auch im eingesetzten Zustand vom Boden 36 des Aufnahmeraumes 4 beabstandet. An der der ersten Drucköffnung 22 diametral entgegengesetzte Umfangsseite ist die Umfangsfläche des Adapters 26 so ausgebildet, dass sie radial von der Längsachse X um ein Maß beabstandet ist, welches kleiner als der halbe Durchmesser des Aufnahmeraumes 4 ist, so dass die zweite Drucköffnung 24 umgebend die Umfangsfläche des Adapters 26 von der Innenwandung 10 des Aufnahmeraumes 4 beabstandet ist.

An dieser Umfangsseite weist der Adapter 26 lediglich einen Vorsprung 38 auf, dessen Außenseite radial von der Längsachse X um ein Maß beabstandet ist, welches dem halben Innendurchmesser des Aufnahmeraumes 4 entspricht. Dieser Vorsprung 36 kommt somit im eingesetzten Zustand des Differenzdrucksensors 12 an der Innenwandung 10 des Aufnahmeraumes 4 zur Anlage, um den Differenzdrucksensor 12 fest im Ausnahmeraum 4 zu positionieren. Der Vorsprung 28 ist jedoch so schmal ausgebildet, dass seitliche Ausnehmungen 40 gebildet werden, welche sich parallel zur Längsachse X und zur Innenwandung 10 des Aufnahmeraumes 4 erstrecken. Die Ausnehmungen 40 bilden Strömungs- bzw. Fluiddurchgänge zwischen dem Bodenbereich des Aufnahmeraumes 4, welcher zwischen dem Boden 36 und der Stirnseite 20 des Differenzdrucksensors 12 gelegen ist, und dem Bereich zwischen der zweiten Drucköffnung 24 und der gegenüberliegenden Innenwandung 10 des Aufnahmeraumes 4. Auf diese Weise wird eine Verbindung zwischen dem zweiten Fluidanschluss 8 und der zweiten Drucköffnung 24 des Differenzdrucksensors 12 realisiert, welche die zweite Druckzone bildet.

Der Einsatz des vorangehend beschriebenen Differenzdrucksensors 12 in dem Bauteil 2 erfolgt vorzugsweise derart, dass der höhere Druck von den Drücken, zwischen denen der Differenzdruck zu bestimmen ist, an dem Fluideingang 8 anliegt. Der höhere Druck liegt somit in der zweiten Druckzone des Aufnahmeraumes 4 an, welche mit dem Fluideingang 8 in Verbindung steht.

Die diametral zu der ersten Drucköffnung 22 und der Dichtfläche 32 entgegengesetzte Umfangsfläche 42 des Adapters 26 ist wesentlich größer ausgebildet als der Umfangsflächenbereich des Adapters 26, welcher mit dem ersten Fluideingang 6 in Verbindung steht und der ersten Druckzone des Aufnahmeraumes 4 zugewandt ist. Somit ist der Abschnitt 42 der Umfangsfläche des Differenzdrucksensors 12 bzw. des Adapters 26, welcher in der zweiten Druckzone des Aufnahmeraumes 4 liegt, wesentlich größer. Gleichzeitig wirkt auf diese Fläche 42, welche mit dem Fluideingang 8 in Verbindung steht auch noch ein höherer Druck. Dadurch wird eine Anpresskraft erzeugt, welche in Richtung des Pfeils A, d. h. radial zu der Längsachse X auf die Verlängerung 18 des Differenzdrucksensors 12 wirkt. Dadurch wird die Dichtfläche 32 gegen die Innenwandung 10 des Aufnahmeraumes 4 im Umfangsbereich des ersten Fluideinganges 6 gedrückt, so dass in diesem Bereich eine sichere Abdichtung zwischen der ersten und der zweiten Druckzone gewährleistet wird.

Figuren 4, 5 und 6 zeigen noch einmal Detailansichten des Adapters 26, welcher vorangehend beschrieben wurde. Wie in der Schnittansicht in Fig. 4 zu sehen ist, weist der Adapter 26 in seinem Inneren einen Hohlraum 44 auf, welcher an der Stirnseite 20 des Adapters 26 verschlossen ist. In den Hohlraum 44 wird die axiale Verlängerung 18 des Drucksensors 12 eingesetzt. Dabei kommt der Adapter 26 aufgrund seiner elastischen Ausgestaltung dichtend an der Oberfläche der axialen Verlängerung 18 zur Anlage. Durch die Wandung des Adapters 26 erstrecken sich vom Hohlraum 44 zur Umfangsfläche des Adapters 26 hin die erste Drucköffnung 22 und die zweite Drucköffnung 24 in diametral entgegengesetzten Richtungen. An der der Stirnseite 20 abgewandten Seite ist der umfängliche Wulst 28 ausgebildet, welcher an der Innenwandung des Aufnahmeraumes 4 zu dessen Abdichtung nach außen hin zur Anlage kommt.

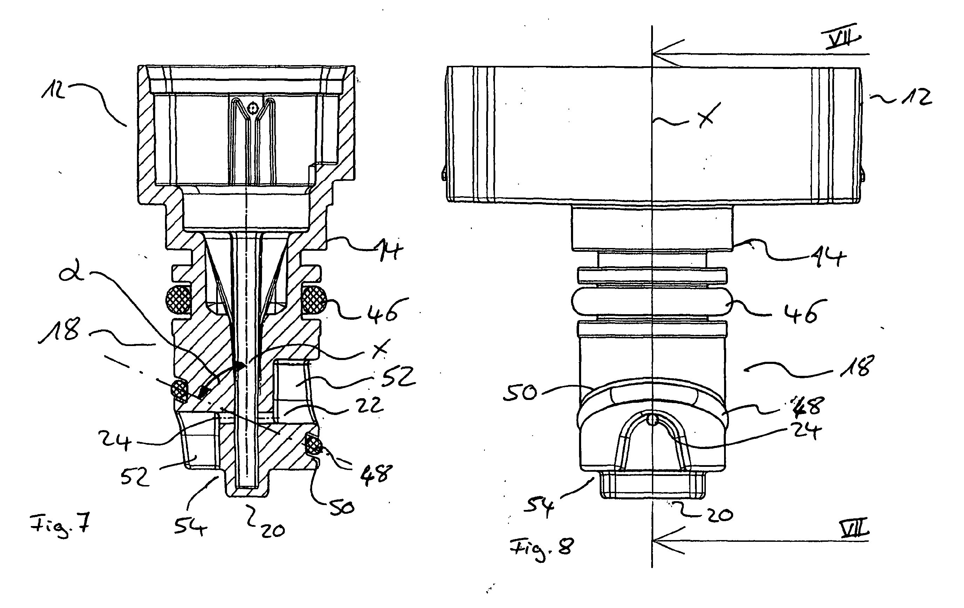

Anhand der Figuren 7 und 8 wird nachfolgend eine zweite Ausführungsform der Erfindung beschrieben, wobei hier gleiche Teile mit gleichen Bezugsziffern bezeichnet werden. Figuren 7 und 8 zeigen lediglich den Differenzdrucksensor 12, der Aufnahmeraum 4, in welchen dieser Differenzdrucksensor 12 eingesetzt wird, entspricht dem anhand der Figuren 1 bis 3 beschriebenen Aufnahmeraum, d. h. der in den Figuren 7 und 8 gezeigte Differenzdrucksensor kann in denselben Aufnahmeraum eingesetzt werden.

Bei der Ausführungsform gemäß Figuren 7 und 8 ist kein Adapter 26 vorgesehen, vielmehr ist das Gehäuse 14 des Differenzdrucksensors 12 im Bereich seiner axialen Verlängerung 18 gleich entsprechend an die Form des Aufnahmeraumes 4 angepasst ausgebildet. Das Gehäuse 14 weist beabstandet zu der Stirnseite 20 eine umfängliche Nut auf, in welche ein O-Ring 46 eingesetzt ist, so dass der O-Ring 46 sich rotationssymetrisch zur Längsachse X erstreckt. Der O-Ring 46 übernimmt bei dieser Ausführungsform die Funktion des Wulstes 28 gemäß der Ausführungsform, welche in Figuren 1 bis 6 gezeigt ist. Das heißt, der O-Ring 46 dichtet den Aufnahmeraum 4 bei eingesetztem Differenzdrucksensor 12 nach außen hin ab.

Ferner weist der Differenzdrucksensor 12 zwei Drucköffnungen 22 und 24 auf, welche mit dem Inneren des Differenzdrucksensors 12 und einem dort angeordneten, hier nicht gezeigten Messelement, in Verbindung stehen, wie anhand der ersten Ausführungsform beschrieben. Auch bei dieser Ausführungsform steht die erste Drucköffnung 22 bei in den Aufnahmeraum 4 eingesetztem Differenzdrucksensor 12 mit einer ersten Druckzone in Verbindung, während die Drucköffnung 24 mit einer zweiten Drucköffnung in Verbindung steht. Die beiden Druckzonen werden gemäß der zweiten Ausführungsform durch einen O-Ring 48 voneinander getrennt, welcher in eine Nut 50 am Außenumfang der Verlängerung 18 eingelegt ist. Der O-Ring 48 kommt bei eingesetztem Differenzdrucksensor 12 mit der Innenwandung 10 des Aufnahmeraumes 4 dichtend zur Anlage. Ferner liegt der O-Ring 48 dichtend an der Bodenfläche der Nut 50 an.

Der O-Ring 48 und die Nut 50 erstrecken sich schräg bzw. geneigt in einem Winkel a zu der Längsachse X und somit schräg zu einer Querschnittsebene normal zu der Längsachse X. Auf diese Weise wird erreicht, dass der O-Ring 48 an der Seite, an welcher die Drucköffnung 22 mündet, in Richtung der Längsachse X näher zu der Stirnseite 20 gelegen ist als an der diametral entgegengesetzten Seite, an welcher die zweite Drucköffnung 24 mündet. Auf diese Weise wird erreicht, dass die beiden Drucköffnungen 22 und 24, auch wenn sie sich in derselben Querschnittsebene erstrecken, d. h. sich an derselben Position in Richtung der Längsachse X befinden, an zwei durch den O-Ring 48 voneinander getrennten Oberflächenbereichen der Umfangsfläche der Verlängerung 18 münden. Das heißt, die Drucköffnungen 22 und 24 münden an der Umfangsfläche des Differenzdrucksensors 12 an zwei entgegengesetzten Seiten des O-Ringes 48. Auf diese Weise wird eine erste Druckzone ausschließlich umfänglich des Differenzdrucksensors 12 zwischen den O-Ringen 48 und 46 geschaffen. Die zweite Druckzone wird an der der Stirnseite 20 zugewandten Seiten des O-Ringes 48 ausgebildet, d. h. die zweite Druckzone erstreckt sich über die Stirnseite 20 des Differenzdrucksensors 12, während die erste Druckzone nur im Umfangsbereichs des Differenzdrucksensors 12 bezüglich der Längsachse X gelegen ist. Durch den Schrägverlauf des O-Ringes 48 wird dabei erreicht, dass in der Querschnittsebene, in welcher sich die Drucköffnungen 22 und 24 erstrecken, am Umfang des Differenzdrucksensors 12 sowohl Teile der ersten Druckzone als auch Teile der zweiten Druckzone gelegen sind. Das heißt, in dieser Querschnittebene erstreckt sich die erste Druckzone bzw. der dieser zugewandte Oberflächenbereich nur über eine Teil des Umfangs.

An der Verlängerung 18 der Differenzdrucksensors 12 sind im Mündungsbereich der ersten Drucköffnung 22 und der zweiten Drucköffnung 24 Ausnehmungen 52 ausgebildet, welche die Verbindung zwischen den Drucköffnungen 22 und 24 sowie den zugehörigen Fluideingängen 6 bzw. 8 ermöglichen. Dabei ist die an dem Druckeingang 22 gelegene Ausnehmung 52 Teil der ersten Druckzone, während die Ausnehmung 52, welche an die Drucköffnung 24 angrenzt Teil, der zweiten Druckzone ist.

Wenn der in den Figuren 7 und 8 gezeigten Differenzdrucksensor 12 in den Aufnahmeraum 4, wie er in Figuren 1 bis 3 gezeigt ist, eingesetzt ist, kommt der O-Ring 48 an der Seite der Drucköffnung 22 des Differenzdrucksensors 12 an der Innenwandung 10 des Aufnahmeraumes 4 zwischen den Fluideingängen 6 und 8 zur Anlage. Ausgehend von dem Fluideingang 8 wird dann über den Spalt zwischen der Stirnseite 20 und die an die Drucköffnung 24 angrenzende Ausnehmung 52 ein Fluiddurchgang geschaffen, so dass der an dem Fluideingang 8 anliegende Druck an der zweiten Drucköffnung 24 anliegt. Der Differenzdrucksensor 12 weist an seiner Stirnseite 20 am Außenumfang zusätzlich einen Rücksprung bzw. eine ringförmige Ausnehmung 54 auf, durch welche die Verbindung zwischen dem zweiten Fluideingang 8 und der Drucköffnung 24 hergestellt wird. Der Fluideingang 8 liegt dabei bei eingesetzten Differenzdrucksensor 12 vorzugsweise direkt der ringförmigen Ausnehmung 54 gegenüber. Auf diese Weise wird zwischen dem Fluideingang 8 und der Drucköffnung 24 an einer Seite des O-Rings die zweite Druckzone gebildet. Der erste Fluideingang 6 liegt direkt der an die erste Drucköffnung 22 anschließenden Ausnehmungen 52 gegenüber, so dass im Bereich der zwischen den O-Ringen 46 und 48 gebildeten ersten Druckzone ein Fluiddurchgang von dem ersten Fluideingang 6 zu der ersten Drucköffnung 22 gebildet wird.

Auch wenn die zweite Ausführungsform der Erfindung ohne die Verwendung eines Adapters 26, wie er anhand der Fig. 1 bis 6 beschrieben wurde, realisiert wurde, kann jedoch auch diese Ausführungsform mit einem solchen Adapter verwirklicht werden. Dabei umgibt der Adapter umfänglich und stirnseitig die Verlängerung 18 und die O-Ringe 46 und 48 werden als entsprechend verlaufen Wülste integral mit dem Adapter 26 ausgebildet. Alternativ kann auch bei der ersten Ausführungsform, welche anhand der Figuren 1 bis 6 beschrieben wurde, auf den Adapter 26 verzichtet werden. Die Dichtfläche 32, welche die erste und die zweite Druckzone bei dieser Ausführungsform trennt, kann hier als separate Dichtung, beispielsweise als O-Ring ausgebildet werden, welche direkt an die Verlängerung 18 angesetzt oder in diese integriert ist. Entsprechend kann anstelle des Wulstes 28 ein in eine Nut eingesetzter O-Ring zur Abdichtung verwendet werden.

### Bezugszeichenliste

- 2: - Bauteil
- 4: - Aufnahmeraum
- 6, 8: - Fluideingänge
- 10: - Innenwandung
- 12: - Differenzdrucksensor
- 14: - Gehäuse
- 16: - Aufnahme für Leiterplatte
- 18: - axiale Verlängerung
- 20: - Stirnseite
- 22, 24: - Drucköffnungen
- 26: - Adapter
- 28: - Wulst
- 30: - Öffnung
- 32: - Dichtfläche
- 34: - Rücksprung
- 36: - Boden
- 38: - Vorsprung
- 40: - Ausnehmungen
- 42: - Bereich der Umfangsfläche
- 44: - Hohlraum
- 46, 48: - O-Ringe
- 50: - Nut
- 52, 54: - Ausnehmungen
- a: - Neigungswinkel
- X: - Längsachse
- A: - Kraftrichtung

## Patentansprüche

1. Differenzdrucksensor-Anordnung mit einem Differenzdrucksensor (12), welcher in Richtung seiner Längsachse (X) in einen Aufnahmeraum (4) eingesetzt ist, **dadurch gekennzeichnet, dass**
an dem Differenzdrucksensor (12) und/oder in dem Aufnahmeraum (4) ein Dichtungselement (32; 48) angeordnet ist, welches den Aufnahmeraum (4) bei eingesetztem Differenzdrucksensor (12) in eine erste und eine zweite Druckzone teilt, welchen die Druckaufnahmebereiche des Differenzdruckensors zum Erfassen der Druckdifferenz zugeordnet sind, wobei
die erste Druckzone vollständig in einem Bereich zwischen einer die Längsachse (X) umgebenden Umfangsfläche des. Differenzdrucksensors (12) und einer dieser zugewandten Innenwandung (10) des Aufnahmeraumes (4) ausgebildet ist und ,zumindest ein Abschnitt der ersten Druckzone sich in Umfangsrichtung nur über einen Teilbereich der Umfangsfläche erstreckt.

2. Differenzdrucksensor-Anordnung nach Anspruch 1, **dadurch gekennzeichnet, dass** eine erste (22) und eine zweite, (24). Drucköffnung an einer Umfangsfläche des Differenzdrucksensors (12) ausgebildet und der umfänglichen Innenwandung (10) des Aufnahmeraumes (4) zugewandt sind.

3. Differenzdrucksensor-Anordnung nach Anspruch 1 oder 2. **dadurch gekennzeichnet, dass** die erste (22) und zweite (24) Drucköffnung an einander entgegengesetzten Seiten an einer Umfangsfläche des Differenzdrucksensors (12) und vorzugsweise in einer gemeinsamen Querschnittsebene des Differenzdrucksensors (12) angeordnet sind.

4. Differenzdrucksensor-Anordnung nach einem der vorangehenden Ansprüche, **dadurch gekennzeichnet, dass**, wenn der Differenzdrucksensor (12) in den Aufnahmeraum (4) eingesetzt, ist, die, erste Drucköffnung (22) einem ersten Fluideingang (6) des Aufnahmeraums (4) gegenüberliegt und dass der diese erste Drucköffnung (22) umgebende Teil (32) der Umfangsfläche des, Differenzdruck sensors (12) dichtend an dem den ersten Fluideingang (6) umgebenden Bereich der Innenwandung (10) des Aufnahmeraumes (4) anliegt.

5. Differenzdrucksensor-Anordnung nach Anspruch 4, **dadurch gekennzeichnet, dass** ein die erste Drucköffnung (22), des Differenzdrucksensors (12) umgebendes Dichtelement (32) vorgesehen ist.

6. Differenzdrucksensor-Anordnung nach Anspruch 4 oder 5, **dadurch gekennzeichnet, dass** der Differenzdrucksensor, (12) zumindest in einem die erste Drucköffnung (22) umgebenden Bereich (32) mit einer elastischen Oberfläche versehen ist.

7. Differenzdrucksensor-Anordnung nach einem der Ansprüche, 4 bis 6, **dadurch gekennzeichnet, dass** zwischen einem der ersten Drucköffnung (22) entgegengesetzten Abschnitt, (42) der Umfangsfläche des Differenzdrucksensors (12) und der umgebenden Innenwandung (10) des Aufnahmeraumes (4) ein Abschnitt der zweiten Druckzone angeordnet ist.

8. Differenzdrucksensor-Anordnung nach einem der Ansprüche 4 bis 7, **dadurch gekennzeichnet, dass** ein zweiter Fluideingang (8) des Aufnahmeraumes (4), welcher in Verbindung mit der zweiten Druckzone steht, zur Anlage eines höhere Fluiddruckes vorgesehen ist als der erste Fluideingang (6).

9. Differenzdrucksensor-Anordnung noch einem der Ansprüche 4 bis 8, **dadurch gekennzeichnet, dass** der Differenzdrucksensor (12) in dem die erste Drucköffnung (22) umgebenden Bereich (32) mit weniger als der Hälfte seiner Umfangsfläche an der Innenwandung (10) des Aufnahmeraumes (4) anliegt.

10. Differenzdrucksensor-Anordnung nach einem der vorangehenden Ansprüche, **dadurch gekennzeichnet, dass** zumindest ein im Inneren des Aufnahmeraumes (4) angeordneter Abschnitt des Differenzdrucksensors (12) eine Ummantelung (26) aus einem elastischen Material aufweist, welche bei eingesetztem Differenzdrucksensor (12) vorzugsweise derart mit der Innenwandung (10) des Aufnahmeraumes (4) zur Anlage kommt, dass dieser nach außen hin abgedichtet ist.

11. Differenzdrucksensor-Anordnung nach Anspruch 10 **dadurch gekennzeichnet, dass** die Ummantelung von einem die äußere Form des Differenzdrucksensors (12) definierenden Adapter (26) gebildet wird, welcher auf das Äußere (14) des Differenzdrucksensors (12) aufgesetzt ist.

12. Differenzdrucksensor-Anordnung nach einem der Ansprüche 1 bis 3, **dadurch gekennzeichnet, dass** zwischen dem Differenzdrucksensor (12) und der innenwandung (10) des Aufnahmeraumes (4) ein sich um die Umfangsfläche des Differenzdrucksensors (12) erstreckender Dichtungsring (48) angeordnet ist, welcher den Aufnahmeraum (4) in die erste und zweite Druckzone teilt,

13. Differenzdrucksensor-Anordnung nach Anspruch 12, **dadurch gekennzeichnet, dass** der Dichtungsring (48) derart geneigt zu einer Querschnittsebene des Differenzdrucksensors (12) angeordnet ist, dass die erste und zweite Druckzone an der Umfangsfläche des Differenzdrucksensors (12) an entgegengesetzten Seiten des Dichtungsringes (48) gelegen sind.

14. Differenzdrucksensor zum Einsatz in einer Differenzdrucksensor-Anordnung nach einem der vorangehenden Ansprüche **dadurch gekennzeichnet, dass**
an der Umfangsfläche des Differenzdrucksensors (12) ein Dichtungselement (32, 48) angeordnet ist, welches die Umfangsfläche in Umfangsrichtung in einen ersten und einen zweiten Oberflächenbereich teilt, von denen sich der erste Oberflächenbereich ausschließlich über die Umfangsfläche und in Umfangsrichtung nur über einen Teilbereich dieser Umfangsfläche erstreckt, wobei eine erste Drucköffnung (22) in dem ersten Obefflöchenbereich und eine zweite Drucköffnung (24) in dem zweiten Oberflächenbereich ausgebildet ist.

15. Differenzdrucksensor nach Anspruch 14, **dadurch gekennzeichnet, dass** das Dichtungselement als eine die erste Drucköffnung umgebende Dichtfläche (32) ausgebildet ist.

16. Differenzdrucksensor nach Anspruch 14, **dadurch gekennzeichnet, dass** das Dichtungselement als Dichtungsring (48) ausgebildet ist, welcher sich über den Umfang des Differenzdrucksensors (12) geneigt zum Querschnitt des Differenzdrucksensors (12) erstreckt.

17. Differenzdrucksensor nach einem der Ansprüche 14 bis 16, **dadurch gekennzeichnet, dass** der Differenzdrucksensor (12) eine vorzugsweise abnehmbare Ummantelung (26) aus einem elastischen Material aufweist, welche zumindest den Teil des Differenzdrucksensors umgibt, in dem Drucköffnungen (22, 24) ausgebildet sind, und die Außenkontur des Differenzdrucksensors (12) einschließlich des Dichtungselementes (32; 48) definiert.

## Claims

1. A differential pressure sensor arrangement with a differential pressure sensor (12), which is inserted in the direction of its longitudinal axis (X) into a receiver space (4), **characterised in that** a sealing element (32; 48) is arranged on the differential pressure sensor (12) and/or in the receiver space (4), and given an inserted differential pressure sensor (12), divides the receiver space (4) into a first and a second pressure zone, to which the pressure recording regions of the differential pressure sensor for detecting the pressure difference are assigned, wherein
the first pressure zone is formed completely in a region between a peripheral surface of the differential pressure sensor (12) surrounding the longitudinal axis (X), and an inner wall (10) of the receiver space (4) which faces this peripheral surface, and at least one section of the first pressure zone extends in the peripheral direction only over a part region of the peripheral surface.

2. A differential pressure sensor arrangement according to claim 1, **characterised in that** a first (22) and a second (24) pressure opening are formed on a peripheral surface of the differential pressure sensor (12), and face the peripheral inner wall (10) of the receiver space (4).

3. A differential pressure sensor arrangement according to claim 1 or 2, **characterised in that** the first (22) and the second (24) pressure opening are arranged on a peripheral surface of the differential pressure sensor (12) on sides which are opposite to one another, and preferably in a common cross-sectional plane of the differential pressure sensor (12).

4. A differential pressure sensor arrangement according to one of the preceding claims, **characterised in that** when the differential pressure sensor (12) is inserted into the receiver space (4), the first pressure opening (22) lies opposite a first fluid entry (6) of the receiver space (4) and that the part (32) of the peripheral surface of the differential pressure sensor (12) which surrounds this first pressure opening (22) sealingly bears on the region of the inner wall (10) of the receiver space (4), which surrounds the first fluid entry (6).

5. A differential pressure sensor arrangement according to claim 4, **characterised in that** a sealing element (32) surrounding the first pressure opening (22) of the differential pressure sensor (12) is provided.

6. A differential pressure sensor arrangement according to claim 4 or 5, **characterised in that** the differential pressure sensor (12) is provided with an elastic surface at least in a region (32) surrounding the first pressure opening (22).

7. A differential pressure sensor arrangement according to one of the claims 4 to 6, **characterised in that** a section of the second pressure zone is arranged between a section (42) of the peripheral surface of the differential pressure sensor (12), which is opposite the first pressure opening (22), and the surrounding inner wall (10) of the receiver space (4).

8. A differential pressure sensor arrangement according to one of the claims 4 to 7, **characterised in that** a second fluid entry (8) of the receiver space (4) which is in connection with the second pressure zone, is envisaged for the prevalence of a higher fluid pressure than the first fluid entry (6).

9. A differential pressure sensor arrangement according to one of the claims 4 to 8, **characterised in that** the differential pressure sensor (12) in the region (32) surrounding the first pressure opening (22) bears on the inner wall (10) of the receiver space (4) with less than half its peripheral surface.

10. A differential pressure sensor arrangement according to one of the preceding claims, **characterised in that** at least one section of the differential pressure sensor (12) arranged in the inside of the receiver space (4) comprises a casing (26) of an elastic material, which, given an inserted differential pressure sensor (12), bears on the inner wall (10) of the receiver space (4), preferably in a manner such that this is sealed to the outside.

11. A differential pressure sensor arrangement according to claim 10, **characterised in that** the casing is formed by an adapter (26) which defines the outer shape of the differential pressure sensor (12) and which is placed onto the outside (14) of the differential pressure sensor (12).

12. A differential pressure sensor arrangement according to one of the claims 1 to 3, **characterised in that** a sealing ring (48) extending around the peripheral surface of the differential pressure sensor (12) is arranged between the differential pressure sensor (12) and the inner wall (10) of the receiver space (4), and divides the receiver space (4) into the first and second pressure zone.

13. A differential pressure sensor arrangement according to claim 12, **characterised in that** the sealing ring (48) is arranged inclined to a cross-sectional plane of the differential pressure sensor (12) in a manner such that the first and the second pressure zone are situated on the peripheral surface of the differential pressure sensor (12) at opposite sides of the sealing ring (48).

14. A differential pressure sensor for the application in a differential pressure sensor arrangement according to one of the preceding claims, **characterised in that**
a sealing element (32, 48) is arranged on the peripheral surface of the differential pressure sensor (12), and divides the peripheral surface in the peripheral direction into a first and a second surface region, of which the first surface region extends exclusively over the peripheral surface, and in the peripheral direction only over a part region of this peripheral surface, wherein a first pressure opening (22) is formed in the first surface region, and a second pressure opening (24) in the second surface region.

15. A differential pressure sensor according to claim 14, **characterised in that** the sealing element is designed as a sealing surface (32) which surrounds the first pressure opening.

16. A differential pressure sensor according to claim 14, **characterised in that** the sealing element is designed as a sealing ring (48) which extends over the periphery of the differential pressure sensor (12) inclined to the cross section of the differential pressure sensor (12).

17. A differential pressure sensor according to one of the claims 14 to 16, **characterised in that** the differential pressure sensor (12) comprises a preferably removable casing (26) of an elastic material, which surrounds at least the part of the differential pressure sensor in which pressure openings (22, 24) are formed, and defines the outer contour of the differential pressure sensor (12) including the sealing element (32; 48).

## Revendications

1. Dispositif capteur de pression différentielle comprenant un capteur de pression différentielle (12) qui, dans la direction de son axe longitudinal (X), est inséré dans un espace de réception (4), **caractérisé en ce que**, sur le capteur de pression différentielle (12) et/ou dans l'espace de réception (4), est disposé un élément d'étanchéité (32 ; 48) qui, lorsque le capteur de pression différentielle (12) est inséré, divise l'espace de réception (4) en une première et une deuxième zones de pression auxquelles sont associées les zones de prise de pression du capteur de pression différentielle pour détecter la différence de pression, dispositif dans lequel
la première zone de pression est intégralement formée dans une zone comprise entre une surface circonférentielle, entourant l'axe longitudinal (X), du capteur de pression différentielle (12) et une paroi intérieure (10), tournée vers celle-ci, de l'espace de réception (4), et au moins une partie de la première zone de pression s'étend, dans une direction circonférentielle, uniquement sur une région partielle de la surface circonférentielle.

2. Dispositif capteur de pression différentielle selon la revendication 1, **caractérisé en ce qu'**un premier (22) et un second (24) orifice de pression sont formés sur une surface circonférentielle du capteur de pression différentielle (12) et tournés vers la paroi intérieure circonférentielle (10) de l'espace de réception (4).

3. Dispositif capteur de pression différentielle selon la revendication 1 ou 2, **caractérisé en ce que** le premier (22) et le second (24) orifice de pression sont disposés sur des côtés mutuellement opposés sur une surface circonférentielle du capteur de pression différentielle (12) et, de préférence, dans un plan de section commun du capteur de pression différentielle (12).

4. Dispositif capteur de pression différentielle selon l'une des revendications précédentes, **caractérisé en ce que**, lorsque le capteur de pression différentielle (12) est inséré dans l'espace de réception (4), le premier orifice de pression (22) est situé en regard d'une première admission de fluide (6) de l'espace de réception (4) et **en ce que** la partie (32), entourant ce premier orifice de pression (22), de la surface circonférentielle du capteur de pression différentielle (12) s'appuie de façon étanche contre la zone, entourant la première admission de fluide (6), de la paroi intérieure (10) de l'espace de réception (4).

5. Dispositif capteur de pression différentielle selon la revendication 4, **caractérisé en ce qu'**est prévu un élément d'étanchéité (32) entourant le premier orifice de pression (22) du capteur de pression différentielle (12).

6. Dispositif capteur de pression différentielle selon la revendication 4 ou 5, **caractérisé en ce que** le capteur de pression différentielle (12) est pourvu, au moins dans une zone (32) entourant le premier orifice de pression (22), d'une surface élastique.

7. Dispositif capteur de pression différentielle selon l'une des revendications 4 à 6, **caractérisé en ce qu'**entre une partie (42), opposée au premier orifice de pression (22), de la surface circonférentielle du capteur de pression différentielle (12) et la paroi intérieure circonférentielle (10) de l'espace de réception (4), est disposée une partie de la deuxième zone de pression.

8. Dispositif capteur de pression différentielle selon l'une des revendications 4 à 7, **caractérisé en ce qu'**une deuxième admission de fluide (8) de l'espace de réception (4), qui communique avec la deuxième zone de pression, est prévue pour application d'une pression de fluide plus élevée que la première admission de fluide (6).

9. Dispositif capteur de pression différentielle selon l'une des revendications 4 à 8, **caractérisé en ce que**, dans la zone (32) entourant le premier orifice de pression (22), le capteur de pression différentielle (12) s'appuie sur moins de la moitié de sa surface circonférentielle, contre la paroi intérieure (10) de l'espace de réception (4).

10. Dispositif capteur de pression différentielle selon l'une des revendications précédentes, **caractérisé en ce qu'**au moins une partie du capteur de pression différentielle (12), disposée à l'intérieur de l'espace de réception (4), présente une enveloppe (26) en matériau élastique qui, lorsque le capteur de pression différentielle (12) est inséré, vient s'appuyer contre la paroi intérieure (10) de l'espace de réception (4), de préférence de telle façon que celui-ci est rendu étanche vers l'extérieur.

11. Dispositif capteur de pression différentielle selon la revendication 10, **caractérisé en ce que** l'enveloppe est formée d'un adaptateur (26) définissant la forme extérieure du capteur de pression différentielle (12), qui est monté sur l'extérieur (14) du capteur de pression différentielle (12).

12. Dispositif capteur de pression différentielle selon l'une des revendications 1 à 3, **caractérisé en ce qu'**entre le capteur de pression différentielle (12) et la paroi intérieure (10) de l'espace de réception (4), est disposé un anneau d'étanchéité (48) s'étendant autour de la surface circonférentielle du capteur de pression différentielle (12), qui divise l'espace de réception (4) en la première et la deuxième zones de pression.

13. Dispositif capteur de pression différentielle selon la revendication 12, **caractérisé en ce que** l'anneau d'étanchéité (48) est disposé de manière inclinée par rapport à un plan de section du capteur de pression différentielle (12) de telle façon que la première et la deuxième zones de pression sur la surface circonférentielle du capteur de pression différentielle (12) sont placées sur des côtés opposés de l'anneau d'étanchéité (48).

14. Capteur de pression différentielle pour utilisation dans un dispositif capteur de pression différentielle selon l'une des revendications précédentes, **caractérisé en ce que**, sur la surface circonférentielle du capteur de pression différentielle (12), est disposé un élément d'étanchéité (32, 48) qui divise la surface circonférentielle, dans une direction circonférentielle, en une première et une deuxième zones superficielles, dont la première zone superficielle s'étend exclusivement sur la surface circonférentielle et, dans la direction circonférentielle, uniquement sur une région partielle de cette surface circonférentielle, un premier orifice de pression (22) étant formé dans la première zone superficielle et un deuxième orifice de pression (24) étant formé dans la deuxième zone superficielle.

15. Capteur de pression différentielle selon la revendication 14, **caractérisé en ce que** l'élément d'étanchéité est réalisé sous la forme d'une surface d'étanchéité (32) entourant le premier orifice de pression.

16. Capteur de pression différentielle selon la revendication 14, **caractérisé en ce que** l'élément d'étanchéité est réalisé sous la forme d'un anneau d'étanchéité (48) qui s'étend sur la périphérie du capteur de pression différentielle (12) en étant incliné par rapport à la section transversale du capteur de pression différentielle (12).

17. Capteur de pression différentielle selon l'une des revendications 14 à 16, **caractérisé en ce que** le capteur de pression différentielle (12) présente une enveloppe (26) de préférence amovible en matériau élastique qui entoure au moins la partie du capteur de pression différentielle dans laquelle sont réalisés les orifices de pression (22, 24), et définit le contour extérieur du capteur de pression différentielle (12), y compris de l'élément d'étanchéité (32, 48).
